# EUROPÄISCHE PATENTANMELDUNG

(11) **EP 0 993 209 A2**
(43) Veröffentlichungstag der Anmeldung: **12.04.2000**
(21) Anmeldenummer: 99118601.6
(22) Anmeldetag: 21.09.1999
(51) Int. Cl.: H04Q 7/34

(54) **Vorrichtung zum Testen von Mobiltelefonen**

(30) Priorität: 21.09.1998 DE 19843182
(71) Anmelder: WAVETEK GMBH, 85737 Ismaning (DE)
(72) Erfinder: Damm, Wolfgang, 85748 Garching (DE); Strauss, Georg, 81543 München (DE)
(74) Vertreter: Neumeister, Kurt Gustav

(57) **Zusammenfassung**

Bei einer Vorrichtung zum Testen von Funkeinrichtungen, insbesondere von Mobiltelefonen, ergibt sich eine Bedienung durch einen Anwender, die selbständig ist, d.h. ohne weitere Hilfestellung des Bedienungspersonals auskommt, und die keine tieferen technische Vorkenntnisse erfordert, dadurch, daß die Vorrichtung als ein Terminal ausgebildet ist.

## Beschreibung

Die vorliegende Erfindung betrifft eine Vorrichtung zum Testen von Funkeinrichtungen gemäß dem Oberbegriff des Patentanspruchs 1. Ferner betrifft die vorliegende Erfindung ein Verfahren gemäß Patentanspruch 9.

Im Stand der Technik sind Meßplätze zum Testen von Mobiltelefonen bekannt. Derartige Funkmeßplätze werden im Rahmen der Fertigung von Mobiltelefonen oder in einer Reparaturwerkstatt eingesetzt. In letzterem Fall sind häufig unerkannte Fertigungsfehler, Defekte bzw. sich außerhalb der Toleranz befindliche Bauteile oder "physische" Beschädigungen die Ursache für Reklamationen. Die Erfahrung zeigt aber auch, daß oftmals Fehlbedienung, fehlerhafte SIM-Karten und mangelnde Funkversorgung in bestimmten Gebieten dazu führen, daß der Mobiltelefon-Kunde beim Händler bzw. Dienst-Provider rasche Abhilfe verlangt. Daher ist es zunächst erforderlich, einen wirklichen Fehler zu bestimmen und zu lokalisieren. Auch wenn der Ansprechpartner des Besitzers des Mobiltelefons, d.h. der Fachhändler, Service-Provider, oder Netzbetreiber, eine Reparatur nicht oder nur bedingt ausführen kann bzw. darf, ist es wichtig, die Fälle auszufiltern, in denen überhaupt kein Defekt vorliegt. Allerdings kostet dieser Test, ob und wo ein eventueller Fehler vorhanden ist, was zumeist ein Einsenden des Mobiltelefons an den Hersteller erforderlich macht, Zeit und Geld, und zwar sowohl für den Kunden als auch für den Fachhändler.

Die Aufgabe der vorliegenden Erfindung besteht daher darin, die Nachteile des Standes der Technik zu vermeiden, und insbesondere eine Vorrichtung zum Testen von Funkeinrichtungen, insbesondere von Mobiltelefonen, zu schaffen, bzw. ein entsprechendes Verfahren anzugeben, bei dem die Funkeinrichtung von einem Anwender selbständig, d.h. ohne weitere Hilfestellung des Bedienungspersonals, und ohne tiefere technische Vorkenntnisse getestet werden kann.

Die erfindungsgemäße Aufgabe wird in vorrichtungstechnischer Hinsicht bei einer Vorrichtung der eingangs genannten Art durch das im kennzeichnenden Teil des Patentanspruchs 1 angegebene Merkmal gelöst. Erfindungsgemäß ist daher das Testgerät als Konsole ausgebildet, die in der äußeren Erscheinung, z. B. einem Geldautomaten einer Bank, also einer an sich bekannten und daher einem Anwender vertrauten und insbesondere ergonomischen Erscheinung, nachgebildet und von dem Anwender eigenständig bedienbar ist.

Ein wesentlicher Vorteil der vorliegenden Erfindung besteht darin, daß die durch die erfindungsgemäße Ausbildung der Testvorrichtung als Terminal oder Konsole, die -in Analogie zu POS- (point of sale) oder POI- (point of information) Terminals- als "point of testing"-Terminal bezeichnet werden kann, der Kunde schneller sein gewünschtes Testergebnis erlangt, da er nicht auf die Verfügbarkeit von geschultem Personal angewiesen ist. Ferner werden dadurch auch die Kosten des Händlers verringert. Schließlich ist bei der vorliegenden Erfindung vorteilhaft, daß ein derartiges Terminal überall, z.B. auch in Geschäften, Supermärkten, Bahnhöfen, Flughäfen etc., und nicht nur in dafür speziell ausgerichteten Werkstätten, aufgestellt bzw. eingesetzt werden kann.

Gemäß einer bevorzugten Ausgestaltung der vorliegenden Erfindung weist die erfindungsgemäße Vorrichtung ferner eine Druckereinrichtung auf. Auf diese Weise können Testergebnisse für den Anwender ausgedruckt werden.

Vorteilhafterweise weist die erfindungsgemäße Vorrichtung eine externe Schnittstelle zur Datenfernübertragung auf. Auf diese Weise können Daten des Mobiltelefons, beispielsweise an einen Reparaturbetrieb, weitergeleitet werden. Ferner ist es möglich, Daten zur statistischen Auswertung, beispielsweise eines Mobilfunkherstellers oder eines Netzwerkbetreibers, weiterzuleiten. Auf diese Weise kann beispielsweise die Häufigkeit eines, für einen bestimmten Typ eines Mobiltelefons auftretenden Fehlers erfaßt werden. Schließlich können dadurch auch aktualisierte Softwareversionen der erfindungsgemäßen Vorrichtung zur Verfügung gestellt werden. Dies gilt z.B. für Testsoftware, aber auch für die Betriebssoftware von unterschiedlichen Typen von Mobiltelefonen.

Vorteilhafterweise weist die Vorrichtung eine Kassiereinrichtung auf, so daß der Anwender für den Test seines Mobiltelefons, beispielsweise in bar und/oder durch eine Geld- oder Kreditkarte an Ort und Stelle bezahlen kann.

Vorzugsweise weist die erfindungsgemäße Testeinrichtung eine Antennenkopplungseinrichtung auf. Eine derartiger Antennenkopplungseinrichtung ist in der Europäischen Patentanmeldung 98114012.2-2206 bzw. 895 300 der vorliegenden Anmelderin mit dem Titel "Antennenkoppler zum Testen von Mobiltelefonen" offenbart, die durch diese Bezugnahme vollinhaltlich in die vorliegende Beschreibung mitaufgenommen wird.

In verfahrenstechnischer Hinsicht wird die Aufgabe der vorliegenden Erfindung durch ein Verfahren gemäß Patentanspruch 9 gelöst.

Weitere bevorzugte Ausgestaltungen der Erfindung sind in den abhängigen Patentansprüchen offenbart.

Die Erfindung, sowie weitere Merkmale und Vorteile derselben wird bzw. werden nachfolgend anhand der beigefügten Zeichnung näher erläutert. In der Zeichnung zeigt:

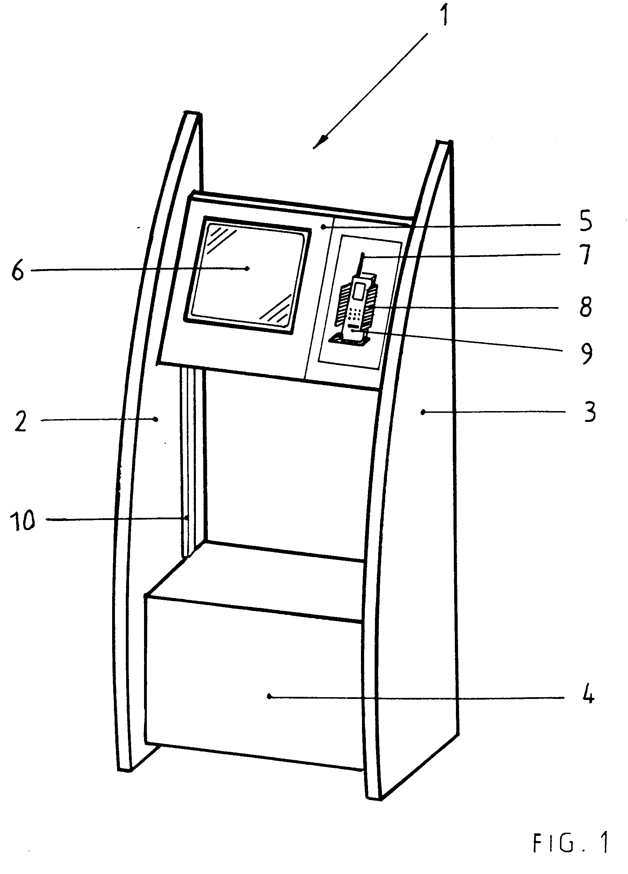

- Fig. 1: eine schematische Darstellung der erfindungsgemäßen Vorrichtung zum Testen von Mobiltelefonen.

In Fig. 1 ist in beispielhafter Form eine Ausführungsform der vorliegenden Erfindung dargestellt. Das erfindungsgemäße stand-alone-Terminal 1 weist zwei Seitenwände 2,3 auf, zwischen denen zwei Gehäuse 4,5 angeordnet sind. In dem unteren Gehäuse 4 sind ein PC und ein herkömmliches Testgerät zum Testen von Mobiltelefonen, das mit dem PC verbunden ist, untergebracht. Das obere Gehäuse 5 nimmt eine Touch-Screen-Anzeige- und Eingabevorrichtung 6 und eine Antennenkopplungseinrichtung 7 mit einem Halteelement 8 für ein Mobiltelefon 9 auf. Der PC ist mit der Touch-Screen-Anzeigevorrichtung 6 und über eine serielle RS 232-Schnittstelle mit dem Testgerät zum Testen von Mobiltelefonen verbunden. Das an sich bekannte Testgerät zum Testen von Mobiltelefonen ist mit der Antennenkopplungseinrichtung 7 verbunden. Entsprechende Leitungen zwischen dem oberen und unteren Gehäuse 5,6 verlaufen in, an der Innenseite der Seitenwände 2,3 angebrachten Schienen 10. In dem PC ist ein Ablaufsteuerprogramm gespeichert, das einer Bedienungsperson ohne Vorkenntnisse ermöglicht, anhand einer Menüsteuerung auf der Touch-Screen-Anzeigevorrichtung 6 das Mobiltelefon 9 zu testen.

Im Betrieb wählt die Bedienungsperson das Mobilfunk-System des zu testenden Mobiltelefons 9. Aufgrund der Touch-Screen-Anzeige- und Eingabevorrichtung 6 kann diese Auswahl durch Berührung eines entsprechenden Menüfeldes erfolgen. Alternativ wäre ebenfalls eine Steuerung über eine herkömmliche PC-Maus oder -Tastatur möglich. Dann gibt der Anwender das Mobiltelefon 9 in das Halteelement 8. Falls der Anwender das Mobiltelefon 9 mit einer kommerziellen SIM-Karte testet, muß dieser das Netzwerk 00101 des Testgeräts manuell einstellen. Falls eine spezielle Test-SIM-Karte verwendet wird, kann das Netzwerk 00101 automatisch ausgewählt werden. Nachdem das Mobiltelefon 9 auf das Testnetzwerk eingestellt ist, wird ein Anruf von dem Mobiltelefon 9 zu dem Testgerät ermöglicht. Dazu wird die Bedienungsperson aufgefordert die voreingestellte Nummer "1234567890" zu wählen. Diese voreingestellte Nummer dient gleichzeitig zum Testen der Tastatur des Mobiltelefons 9 und danach für die korrekte Anrufempfangssignalisierung. Während dieser und die weiteren Tests fortfahren, wird eine Sonnensymbol auf der Touch-Screen-Anzeigevorrichtung 6 angezeigt, das von links nach rechts fortschreitet. Ferner ist am unteren Rand des Bildschirms eine Anzeige einer Wellendarstellung vorgesehen, die während dieser Sendermessung von einem schematisch dargestellten Mobiltelefon zu einer schematisch dargestellten Basisstation läuft. Falls ein Testschritt nicht innerhalb einer vorgegebenen Zeitspanne durchgeführt werden kann, wird eine Meldung mit entsprechendem Inhalt, wie z. B. "Kein Anruf von dem Mobiltelefon empfangen" angezeigt. Falls der Anruf erfolgreich war, fährt das Ablaufsteuerprogramm mit der Analyse der Herstellers und des Modells des Mobiltelefons 9 fort. Diese Daten können aus der mit dem Anruf übertragenen IMEI-Nummer und/oder aus Kennlinien ermittelt werden. Ebenfalls kann aus der übertragenen IMSI-Nummer Kundeninformation für statistische Zwecke gewonnen werden. Anschließend werden aus einer Datenbank des Ablaufsteuerprogramms alle, für das spezielle Mobiltelefon 9 zu Testzwecken wesentlichen Parameter geladen. Das Programm wendet diese Parameter automatisch an und testet dabei die Sender-Stufe des Mobiltelefons 9. Dabei werden insbesondere die TX-Leistung, der RMS und der Spitzenphasenfehler, Frequenz, Leistung in Abhängigkeit von der Zeit, Burst-Länge getestet. Nach den Sender-Tests empfängt das Mobiltelefon 9 einen Anruf von dem Testgerät, um die Empfängerfunktionen zu testen. Es ertönt also ein Läuten des Mobiltelefons 9. Über den Bildschirm wird dem Anwender angezeigt, den Anruf anzunehmen, um die korrekte Anrufempfangssignalisierung und eine korrekte visuelle und/oder hörbare Anrufsignalisierung zu testen. Anschließend werden alle wichtigen Empfänger-Funktionen getestet. Wiederum ist am unteren Rand des Bildschirms eine Anzeige einer Wellendarstellung vorgesehen, die während dieser Empfängermessung von einer schematisch dargestellten Basisstation zu einem schematisch dargestellten Mobiltelefon zu läuft. Auf dem Bildschirm werden Meldungen über die einzelnen Testschritte angezeigt. Anschließend wird der Anwender aufgefordert eine Test-Nachricht in das Mobiltelefon 9 zu sprechen und auf ein Echo, d.h. eine zurückgesendete Wiederholung der Nachricht, zu warten. Dadurch werden der Lautsprecher und das Mikrofon des Mobiltelefons 9 getestet. Zur bequemen Ausführung dieses Tests kann der Anwender das Mobiltelefon 9 von der Halterung bzw. dem Aufnahmeelement nehmen, ohne den Kontakt zu dem Test-Netzwerk zu verlieren.

Falls alle Tests erfolgreich verlaufen sind, erhält der Anwender eine "Test bestanden"-Anzeige. Alle Ergebnisse aus jedem einzelnen Test werden in dem PC als ASCII-Datei für eine spätere Auswertung oder zum späteren Ausdruck gespeichert. Der Anwender kann einen detaillierten Testbericht anfordern oder einen neuen Test durchführen. Ein "Test bestanden" bedeutet dabei, daß folgende Funktionen und Bauelemente ordnungsgemäß funktionieren: Signalisierung zum Anrufsaufbau und Freigabe, Ortsaktualisierung, Software-Revision des Mobiltelefons, Lautsprecher und Mikrofon, Tastatur, Sender, Empfänger, Antenne, Audio-Pfad, und SIM-Leser.

Falls ein oder mehrere Testschritte nicht erfolgreich verlaufen sind, erhält der Anwender eine "Test nicht bestanden"-Nachricht. Zusätzlich erhält der Anwender eine Meldung über die Ursache des Fehlers und darüber, was zu tun ist, um den Fehler zu beheben. Falls Fehler aufgetreten sind, kann der Anwender eine Liste von allen Hauptmodulen des Mobiltelefons 9 mit einer "Test bestanden"/"Test nicht bestanden" Information anfordern.

Es sei bemerkt, daß der detaillierte Testbericht für Experten dabei im Fall eines bestandenen Tests grün, im Fall eines nicht bestandenen Tests rot und im Fall eines nicht durchgeführten Tests gelb angezeigt wird.

Die Erfindung wurde zuvor anhand eines bevorzugten Ausführungsbeispiels näher erläutert. Für einen Fachmann ist es jedoch offensichtlich, daß verschiedene Abwandlungen und Modifikationen gemacht werden können, ohne von dem der Erfindung zugrundeliegenden Gedanken abzuweichen.

## Patentansprüche

1. Vorrichtung zum Testen von Funkeinrichtungen, insbesondere von Mobiltelefonen, dadurch gekennzeichnet, daß die Vorrichtung als ein Terminal ausgebildet ist.

2. Vorrichtung zum Testen von Funkeinrichtungen nach Anspruch 1, dadurch gekennzeichnet, daß die Vorrichtung folgendes aufweist:
- eine Steuereinrichtung mit einem darin gespeicherten Ablaufsteuerprogramm für den Test;
- eine Testeinrichtung zum Erzeugen und Auswerten von Testsignalen;
- eine Eingabevorrichtung zur Eingabe von Parametern und Befehlen;
- eine Anzeigevorrichtung zur Anzeige von Testergebnissen und von Menüschritten; und
- eine Antennenkoppeleinrichtung für die Funkeinrichtung zum Senden und Empfangen der Testsignale.

3. Vorrichtung zum Testen von Funkeinrichtungen nach Anspruch 1 oder 2, dadurch gekennzeichnet, daß die Vorrichtung ferner eine Druckereinrichtung aufweist.

4. Vorrichtung zum Testen von Funkeinrichtungen nach Anspruch 1 oder 2, dadurch gekennzeichnet, daß die Eingabevorrichtung und die Anzeigevorrichtung in einer Einheit, insbesondere als Touch-Screen, ausgebildet sind.

5. Vorrichtung zum Testen von Funkeinrichtungen nach Anspruch 2 oder 3, dadurch gekennzeichnet, daß die Eingabevorrichtung und/oder die Anzeigevorrchtung schräg ausgebildet ist, wobei vorzugsweise die Eingabevorrichtung und die Antennenkoppeleinrichtung im wesentlichen benachbart zueinander angeordnet sind.

6. Vorrichtung zum Testen von Funkeinrichtungen nach einem der vorhergehenden Ansprüche, dadurch gekennzeichnet, daß die Vorrichtung eine externe Schnittstelle zur Datenfernübertragung aufweist.

7. Vorrichtung zum Testen von Funkeinrichtungen nach einem der vorhergehenden Ansprüche, dadurch gekennzeichnet, daß die Vorrichtung eine Speichereinrichtung zur Speicherung von Daten, insbesondere von anwenderspezifischen Daten, aufweist.

8. Vorrichtung zum Testen von Funkeinrichtungen nach einem der vorhergehenden Ansprüche, dadurch gekennzeichnet, daß die Vorrichtung eine Kassiereinrichtung aufweist, wobei vorzugsweise die Vorrichtung eine Ladeeinrichtung für eine aufladbare Batterie der Funkeinrichtung aufweist, und wobei vorzugsweise die Ladeeinrichtung in der Antennenkoppeleinrichtung integriert ist, und wobei vorzugsweise die Vorrichtung eine Einrichtung zum Bestimmen des Typs der Funkeinrichtung aufweist.

9. Verfahren zum Testen von Funkeinrichtungen, insbesondere von Mobiltelefonen, durch eine Bedienungsperson, insbesondere unter Verwendung eines Terminals, insbesondere einer Vorrichtung gemäß einem der Ansprüche 1 bis 8, wobei das Verfahren folgende Schritte aufweist:
- Einschalten der Funkeinrichtung durch eine Bedienungsperson;
- Anbringen der Funkeinrichtung an eine Aufnahmeeinrichtung des Terminals;
- Auswahl eines Test-Funknetzes;
- Wahl einer vorgegebenen Nummer auf einer Tastatur der Funkeinrichtung zum Herstellen der Verbindung zwischen dem Terminal und der Funkeinrichtung;
- Erkennen und Anzeige des Herstellers und des Modells der Funkeinrichtung;
- Testen der Senderfunktionen der Funkeinrichtung;
- Beenden der Verbindung zwischen dem Terminal und der Funkeinrichtung;
- Senden eines Anrufs von einer Testeinrichtung des Terminals an die Funkeinrichtung;
- Annahme der Anrufs durch die Bedienungsperson;
- Testen der Empfängerfunktionen der Funkeinrichtung;
- Sprechen einer Nachricht;
- Erzeugen eines Echos der Nachricht; und
- Anzeigen eines Testergebnisses.

10. Verfahren nach Anspruch 9, dadurch gekennzeichnet, daß die Nummer alle Ziffern von 0 bis 9 aufweist, wobei vorzugsweise die Vorrichtung in einem Schritt den Ladezustand einer wiederaufladbaren Batterie der Funkeinrichtung testet, und erforderlichenfalls in einem weiteren Schritt die wiederaufladbare Batterie auflädt.
